# EUROPÄISCHE PATENTANMELDUNG

(11) **EP 2 008 915 A2**
(43) Veröffentlichungstag der Anmeldung: **31.12.2008**
(21) Anmeldenummer: 08104229.3
(22) Anmeldetag: 03.06.2008
(51) Int. Cl.: B62D 15/02

(54) **Vorrichtung zur semiautonomen Unterstützung der Lenkbewegung eines Fahrzeuges**

(30) Priorität: 28.06.2007 DE 102007029960
(71) Anmelder: ROBERT BOSCH GMBH, 70442 Stuttgart (DE)
(72) Erfinder: Pampus, Christian, 70825, Korntal-Muenchingen (DE)

(57) **Zusammenfassung**

Die Erfindung betrifft eine Vorrichtung zur semiautonomen Unterstützung der Lenkbewegung eines Fahrzeuges, mit Unterstützungsmittel zur Bereitstellung von Informationen über Lenkstellungen einer Fahrzeuglenkung und über eine zurückgelegte Strecke bei einer Fahrzeugfahrt. Es wird vorgeschlagen, dass eine durch eine Lernfahrt eingelernte Soll-Bahn (16) für eine festgelegte Umgebung in einer Rechnereinheit ablegbar ist, dass die Unterstützungsmittel dazu ausgelegt sind, auf die Soll-Bahn (16) bei Erreichen einer vorgegebenen Position des Fahrzeuges (13) in der festgelegten Umgebung zurückzugreifen und den Fahrer beim Führen des Fahrzeugs (13) entlang der Soll-Bahn (16) unterstützen.

## Beschreibung

Die Erfindung betrifft eine Vorrichtung zur semiautonomen Unterstützung der Lenkbewegung bei Fahrzeugen nach Anspruch 1.

### Stand der Technik

Das Führen von Kraftfahrzeugen in einer ungewohnten Umgebung mit z.B. dicht an eine Fahrbahn heranreichenden Hindernissen bzw. mit einem Fahrzeug, mit welchem man keine oder kaum Erfahrungen hat, wird vom Fahrer häufig als schwierig und unangenehm empfunden. Außerdem nimmt mit zunehmendem Alter des Fahrers in diesen Situationen dessen Fahrsicherheit bzw. Vertrauen in die eigene Fahrkompetenz ab. Bisher sind verschiedene Systeme bekannt, um den Fahrzeugführer bei der Navigation des Kraftfahrzeuges zu unterstützen. Beispielsweise zielen derartige Systeme darauf ab, den Fahrer beim Einparken zu assistieren. Der Grad der Unterstützung kann dabei variieren. Beispielsweise sind bei sogenannten Parkpilotsystemen Hilfseinrichtungen auf Ultraschall- bzw. Radarbasis vorhanden, mit Hilfe derer dem Fahrer Informationen über Hindernisse im Nahbereich des Fahrzeuges vorliegen, wobei der eigentliche Lenkvorgang vom Fahrer selbst ausgeübt wird.

Außerdem existieren Systeme mit einer Regelung der Bahn des Fahrzeuges, wodurch dem Fahrer Lenkanweisungen übermittelt werden oder eine Lenkregelung durchgeführt wird. Erweiterungen dieser Systeme ermöglichen zusätzlich eine dynamische Adaption der Bahnregelung, wobei beispielsweise über eine Umfeldsensorik am Fahrzeug eine Anpassung an die tatsächlich vorhandenen Gegebenheiten im Nahbereich des Fahrzeugs beispielsweise eines Parkraums erfolgen kann. Diese Anordnungen sind vergleichsweise aufwändig bzw. teuer einzurichten.

Aus der DE 38 130 83 A1 ist eine automatische Einparkeinrichtung für Kraftfahrzeuge bekannt.

### Aufgabe und Vorteile der Erfindung

Der Erfindung liegt die Aufgabe zugrunde, eine Vorrichtung zur semiautonomen Unterstützung der Lenkbewegung eines Fahrzeuges bei sich wiederholenden Fahraufgaben in einer lokalen festgelegten Umgebung bereit zu stellen, welche dem Fahrer den Lenkvorgang erleichtert.

Diese Aufgabe wird durch die nebengeordneten Ansprüche gelöst. In den abhängigen Ansprüchen sind vorteilhafte Weiterbildungen der Erfindung aufgezeigt.

Die Erfindung geht aus von einer Vorrichtung zur semiautonomen Unterstützung der Lenkbewegung eines Fahrzeuges, mit Unterstützungsmittel zur Bereitstellung von Informationen über Lenkstellungen einer Fahrzeuglenkung und über eine zurückgelegte Strecke bei einer Fahrzeugfahrt. Der Kern der Erfindung liegt darin, dass eine durch eine Lernfahrt eingelernte Soll-Bahn für eine festgelegte Umgebung in einer Rechnereinheit ablegbar ist und dass die Unterstützungsmittel dazu ausgelegt sind, auf die Soll-Bahn bei Erreichen einer vorgegebenen Position des Fahrzeuges in der festgelegten Umgebung zurückzugreifen und den Fahrer beim Führen des Fahrzeugs entlang der Soll-Bahn unterstützen. Damit kann die Navigation eines Kraftfahrzeuges durch einen Fahrer in lokaler, eng begrenzter Umgebung unterstützt und damit erleichtert werden. Unfallereignisse aufgrund nicht beherrschter bzw. komplexer Lenkaufgaben in individuellen Situationen lassen sich nahezu ausschließen bzw. minimieren. Außerdem kann ein Fahren unter Angst aufgrund von voraussichtlich nicht sicher beherrschten Fahrsituationen vermieden werden. Auf diese Weise können Fahrer, die bei schwierigen Fahrsituationen in lokal begrenzter Umgebung, bei untypischen örtlich begrenzten Gegebenheiten in der Fahrwegführung, bei ungewöhnlich dicht an die Fahrbahn heranreichenden Hindernissen oder bei einer Fahrt mit einem ungewohnten Fahrzeug, ohne Angst bzw. mit einem erhöhten Sicherheitsgefühl fahren.

Mit der erfindungsgemäßen Anordnung können die Fahraktivitäten selbst für unerfahrene oder unsichere Fahrer, zum Beispiel für ältere Fahrer, gesteigert werden, welche andernfalls selbst selten fahren oder das Führen von Fahrzeugen ganz aufgeben würden. Insbesondere können regelmäßig auf gleichen Abschnitten auftretende schwierige Fahrsituationen, beispielsweise bei einer hauseigenen Tiefgarage oder einer engen Kurve einer häufig gefahrenen Hofeinfahrt, problemlos gemeistert werden, ohne auf das selbstständige Fahren ganz verzichten zu müssen. Die regelmäßig bzw. immer wieder auftretenden Fahrten von und nach zuhause sind aber die überwiegenden Fahrereignisse der Gesamtheit aller Fahraktivitäten.

Lediglich für die Adaption an ein neues Umfeld bzw. eine erstmalige Konditionierung des Fahrzeugs insbesondere für meist nur wenige bzw. kurze Fahrstreckenabschnitte muss gegebenenfalls die einmalige Hilfe eines erfahrenen bzw. geschulten Fahrers beansprucht werden, was vergleichsweise wenig aufwändig ist. Auch das Fahren mit großen, unübersichtlichen Fahrzeugen bzw. mit Fahrzeugtypen, mit denen der Fahrer selten bzw. zuvor noch nie gefahren ist, wird kein Problem darstellen. Als Folge der erfindungsgemäßen Vorgehensweise werden die betreffenden Personen wieder ermutigt, ein Fahrzeug zu führen, wohingegen ohne die vorgeschlagene Anordnung diese Personen aufgrund der oben genannten Gründe zumindest zeitweise oder sogar dauerhaft kein Fahrzeug mehr führen würden.

Die erfindungsgemäße Vorrichtung kann allgemein anwendbar jedoch für unterschiedlichste Fahraufgaben genutzt werden. Insbesondere ist die Vorrichtung nicht auf bestimmte, festgelegte standardisierte Situationen beschränkt, wie es beispielsweise beim Einparken in eine Quer- oder Längsparklücke der Fall ist. Sie kann nämlich insbesondere dann angewandt werden, wenn die Umgebung im Vorhinein zwar bekannt ist, dabei aber keine allgemein gleichartige Fahraufgabe zu lösen ist. Beispielsweise können mit der erfindungsgemäßen Vorrichtung völlig unterschiedliche bzw. individuelle Fahrsituationen gemeistert werden.

Die abgespeicherte Soll-Bahn bzw. die dazugehörigen Daten der Soll-Bahn können später jederzeit von dem jeweiligen Fahrer abgerufen werden. Der Fahrer kann dazu z.B. das Fahrzeug in der festgelegten Umgebung an einen Punkt der Soll-Bahn bzw. eine vorgegebenen Position in der festgelegten Umgebung bringen, um von dieser Position ausgehend die eingelernte Soll-Bahn abzurufen. Anschließend kann das Fahrzeug von dem Fahrer mit Unterstützung durch die erfindungsgemäße Vorrichtung kollisionsfrei entlang der Soll-Bahn geführt werden kann. Das Fahrzeug muss zur Nutzung der Vorrichtung vorher in der Regel zwar in eine gewünschte Startposition bzw. entsprechend ausgerichtet gebracht werden, dies ist aber in der Regel unkritisch, da zum Beispiel das Heranfahren an die Startposition bzw. an einen Nahbereich um die Startposition in einem Fahrstreckenbereich erfolgt, der bezüglich des fahrerischen Könnens unproblematisch ist. Die Startposition ist daher insbesondere so zu wählen, dass diese selbst für einen ungeübten Fahrer ohne Problem angesteuert werden kann.

Die Unterstützung für den ungeübten Fahrer erfolgt derart, dass es dem Fahrer möglich ist, das Fahrzeug entlang der Soll-Bahn zu führen. Dies schließt ein, dass das Fahrzeug von dem ungeübten Fahrer zumindest abschnittsweise exakt auf der Soll-Bahn bewegt wird oder mit einer vorgebbaren noch tolerierbaren Abweichung von der Soll-Bahn. Die vorgebbare tolerierbare beidseitig mögliche Abweichung der tatsächlich gefahrenen Bahn des Fahrzeugs von der Soll-Bahn ist insbesondere so vorzugeben, dass keine ungewollte bzw. ungeeignete Fahrsituation auftreten kann. Insbesondere sind die vorgebbaren maximal erlaubten Abweichungen so zu wählen, dass Kollisionen mit Hindernissen im Nahbereich der zurückzulegenden Fahrstrecke ausgeschlossen sind. Beim Annähern des Fahrzeugs an die Grenze der tolerierbaren Abweichung bzw. beim Überschreiten der erlaubten maximalen Abweichung von der Soll-Bahn kann dem Fahrer dies entsprechend deutlich signalisiert werden oder ggf. ein selbsttätiger Eingriff in die Fahrzeugführung vorgenommen werden, um eine Kollision oder dergleichen zu vermeiden.

Weiter wird vorgeschlagen, dass eine Kommunikationseinrichtung vorgesehen ist, mit welcher dem Fahrer auf Grundlage der eingelernten Soll-Bahn Informationen und/oder Anweisungen zum Lenken des Fahrzeugs für die Fahrt entlang der Soll-Bahn mitteilbar sind. Beim Anfordern bzw. Auswählen und anschließenden Aktivieren der gelernten Soll-Bahn bzw. Soll-Trajektorie erhält der Fahrer entweder Lenkhinweise, mit denen er das Fahrzeug entlang der gelernten Soll-Bahn führen kann, oder es wird eine Lenkregelung verwendet, bei welcher die Abfolge der Lenkeinschläge selbsttätig ohne Lenkeinwirkung durch den Fahrer erfolgt, z.B. mit einem gesteuerten bzw. geregelten Servomotor. Bei den Regelungsalgorithmen, die insbesondere in der Rechnereinheit abgelegt sind, kann falls eine bekannte Anordnung mit einer Bahnregelung und dynamischer Adaption vorhanden ist, weitgehend auf die in dieser Anordnung vorhandenen Komponenten zurückgegriffen werden. Damit sind zusätzliche Maßnahmen bei Vorhandensein solcher bekannter Systeme zur Einrichtung der vorgeschlagenen Vorrichtung vergleichsweise gering. Für die vorgeschlagene Vorrichtung ist insbesondere eine Fahrzeug-Positionsbestimmung bzw. eine Odometrie erforderlich, um beim Ab- bzw. Nachfahren einer gelernten Soll-Bahn die Ist-Position gegenüber der Soll-Position zu überprüfen und ggf. nachzuregeln.

Es ist überdies bevorzugt, dass Lenkkontrollmittel zur fahrerunabhängigen Kontrolle der Lenkbewegung des Fahrzeugs vorhanden sind, um die Lenkung des Fahrzeugs zu kontrollieren, so dass das Fahrzeug entlang der Soll-Bahn fährt. Damit kann auch in Fällen, bei denen der Fahrer sich um Unklaren über eine notwendige Lenkbewegung ist, die Lenkbewegung des Fahrzeuges durch die Lenkkontrollmittel gemäß der eingelernten und in der Rechnereinheit hinterlegten Soll-Bahn ermöglicht werden.

Vorteilhafterweise ist die Rechnereinheit ausgebildet, eine Mehrzahl von unterschiedlichen Soll-Bahnen bereit zu stellen. Damit können in der Rechnereinheit unterschiedliche durch räumliche Gegebenheiten bestimmte abzufahrende Soll-Trajektorien bzw. Lenkvorgaben in einer festgelegten bzw. vorgegebenen Umgebung hinterlegt werden, in welcher Fahrvorgänge voraussichtlich wiederholt abgefahren werden. Damit kann der ungeübte Fahrer eine fast beliebige Zahl von schwierigen Fahrsituationen meistern, indem er auf die jeweils dazugehörige eingelernte Soll-Bahn zurückgreifen kann. Hierzu muss es lediglich möglich sein, unterschiedliche eingelernte Soll-Bahnen in der Rechnereinheit zu identifizieren, zuzuordnen, abzurufen und wieder abzulegen.

Weiter wird vorgeschlagen, dass Mittel vorhanden sind, um bei Erreichen zumindest eines Punktes der Soll-Bahn durch das Fahrzeug, das Fahrzeug entlang einer Soll-Bahn unterstützt geführt werden kann. Insbesondere ist vorher der Fahrer darüber zu informieren, dass ein solcher Punkt erreicht ist, worauf der Fahrer entscheiden kann, ob er auf die gelernte Soll-Bahn zurückgreifen möchte oder nicht. Dies bedeutet, dass selbst wenn ein Fahrer nicht damit rechnet oder es nicht weiß, dass eine Soll-Bahn für die erreichte Fahrposition bereitsteht, kann der Fahrer die Lenkunterstützung nutzen, indem er dahingehend aufmerksam gemacht wird. Die vorgeschlagenen Mittel müssen demnach erkennen ob bzw. wann eine Ist-Position des Fahrzeugs zumindest im Nahbereich einer Soll-Position sich befindet oder mit einer Soll-Position einer hinterlegten Soll-Bahn übereinstimmt, worauf der Fahrer mit geeigneten Einrichtungen darüber informiert wird, zum Beispiel akustisch und/oder optisch bzw. haptisch.

Damit kann der Fahrer einen maximalen Nutzen aus der vorgeschlagenen Vorrichtung ziehen, indem der Fahrer zu einem frühest möglichen Zeitpunkt die Information erhält, dass er auf eine hinterlegte Soll-Bahn zurückgreifen kann. Damit kann der Fahrer zu jeder Zeit eine bzw. sämtliche hinterlegten Soll-Bahnen nutzen, wenn er dies möchte, bzw. es bleibt keine Soll-Bahn versehentlich ungenutzt. Dies erhöht insgesamt die Wertigkeit des Systems bzw. eine maximale Fahrerunterstützung unter Minimierung einer Kollisionsgefahr für die Abschnitte der Fahrstrecken, für welche eine Soll-Bahn hinterlegt ist. Grundsätzlich kann eine hinterlegte Soll-Bahn auch nicht genutzt werden, wenn z.B. der Fahrer ein geübter Fahrer ist.

Vorteilhafterweise sind Mittel vorgesehen, um bei Erreichen zumindest eines Punktes eines Koordinatenfeldes im Nahbereich der Soll-Bahn den Fahrer darüber zu informieren, dass das Fahrzeug entlang einer Soll-Bahn unterstützt geführt werden kann. Damit kann bereits bei Erreichen eines Punktes durch das Fahrzeug, welcher nicht unmittelbar auf der Soll-Bahn liegt, sondern in der Nähe einer eingelernten Soll-Bahn, automatisch auf die Soll-Bahn zurück gegriffen werden kann, wobei das Fahrzeug sicher entlang der eingelernten Soll-Bahn führbar ist. Um von der Position in der Nähe der Soll-Bahn einen Punkt der Soll-Bahn zu erreichen, kann der Fahrer insbesondere über die Kommunikationseinrichtung Anweisungen zum Lenken des Fahrzeugs erhalten und geführt auf die Soll-Bahn gelangen. Alternativ oder kombiniert kann auch mittels Lenkregelung die Soll-Bahn erreicht werden.

Bevorzugt ist im Fahrzeug eine elektrische Servolenkung vorgesehen. Mit einer elektrischen bzw. elektromechanischen Servolenkung (EPS) ist es dem Fahrer besonders bequem möglich, eine gewünschte Lenkbewegung entsprechend den über die Kommunikationseinrichtung gegebenen Anweisungen auszuführen.

Eine weitere Ausführungsform der erfindungsgemäßen Anordnung zeichnet sich dadurch aus, dass Positionserfassungsmittel vorhanden sind, um eine aktuelle Ist-Position des Fahrzeugs zu erfassen und mit einer Soll-Position entsprechend der Soll-Bahn zu vergleichen. Damit können zu jedem Zeitpunkt ggf. auftretende Abweichungen der tatsächlichen Fahrzeugposition gegenüber einer gewünschten Fahrzeugposition gemäß der eingelernten Soll-Bahn festgestellt und ggf. korrigiert werden. Die Korrektur kann z.B. mit der Kommunikationseinrichtung dem Fahrer über Anweisungen mitgeteilt werden bzw. es können Korrekturvorschläge gemacht werden und/oder es erfolgt eine entsprechende Lenkregelung zur Korrektur der Fahrzeugposition.

Bevorzugt sind die Kommunikationseinrichtung und/oder die Lenkkontrollmittel ausgebildet, mit den Positionserfassungsmitteln zusammenzuarbeiten, um die Ist-Position des Fahrzeuges an die Soll-Position anzupassen. Somit kann jeweils eine der Anordnungen oder mit deren Zusammenspiel zu jedem Zeitpunkt bei der Fahrt des Fahrzeuges entlang der Soll-Bahn bzw. bei aktivierter Soll-Bahn ein Abgleich der Fahrposition mit einer gewünschten Soll-Position des Fahrzeuges erfolgen. Dem Fahrer werden insbesondere unmittelbar entsprechende Anweisungen gegeben oder eine Lenkregelung greift in die Lenkung ein, damit keine Abweichung mehr existiert bzw. um die Soll-Position zu erreichen.

Weiter wird vorgeschlagen, das Mittel eines Parkpilotsystems vorhanden sind. Unter Parkpilotsystemen sind insbesondere Systeme zu verstehen, bei denen weder ein Lenkvorgang an den Fahrer übermittelt wird noch eine Regelung durch das System selbst durchgeführt wird. Diese Systeme verfügen beispielsweise über Umfelderfassung auf z.B. Ultraschall- oder Radarbasis. Die erfindungsgemäße Vorrichtung lässt sich damit auch mit bekannten Parkpilotsystemen vorteilhaft kombinieren. Insbesondere können Zusatzfunktionen der erfindungsgemäßen Vorrichtung an ein bestehendes Parkpilotsystem adaptiert werden. Zusätzliche Kosten für die Installation bzw. Nutzung der vorgeschlagenen Vorrichtung lassen sich so auf ein unbedingt notwendiges Maß reduzieren.

Vorteilhafterweise sind Sensormittel zur Erfassung eines Umfeldes des Fahrzeuges vorhanden. Darunter sind insbesondere intelligente Systeme zur Umfelderfassung eines Fahrzeuges, beispielsweise eine Umfeldsensorik mit Video-, Ultraschall-, und/oder Radarunterstützung denkbar. Das erfindungsgemäße System kann diese Hilfstechniken selbst aufweisen, z.B. wenn diese bei einer nachträglichen Installation der vorgeschlagenen Anordnung im Fahrzeug noch nicht vorhanden sind. Die vorgeschlagene Vorrichtung zur semiautonomen Unterstützung lässt sich jedoch auch an Systeme mit Bahnregelung und dynamischer Adaption adaptieren bzw. problemlos als Erweiterung zu diesen aufsetzen bzw. darin integrieren.

Besonders bevorzugt ist es, dass die Rechnereinheit in einem Bussystem des Fahrzeuges integriert ist. Damit kann ein vorhandenes Fahrzeug-Bussystem optimal für die Aufgaben bzw. für die Nutzung der erfindungsgemäßen Vorrichtung Verwendung finden.

Schließlich ist die Rechnereinheit derart ausgebildet, dass auf die Soll-Bahn zurückgreifbar ist, um den Fahrer zu unterstützen, das Fahrzeug entlang der Soll-Bahn mit einer Rückwärtsfahrt des Fahrzeugs zu führen. In Fällen, in denen es nur mit einer Rückwärtsfahrt möglich ist, aus einer erreichten Fahrzeugposition weiterzukommen, ist eine semiautonom unterstützte Lenkbewegung für eine Rückwärtsfahrt entlang der Soll-Bahn hilfreich. Insbesondere Rückwärtsfahrten stellen ungeübte oder ältere Fahrer häufig vor größere Probleme, womit die erfindungsgemäße Vorrichtung das Fahren für solche Personen auch in Parksituation oder anderen vergleichbaren Situationen deutlich vereinfacht.

### Zeichnungen

Anhand der stark schematisierten Figuren ist die Erfindung unter Angabe weiterer Vorteile und Einzelheiten im Folgenden näher erläutert. Es zeigen:
- Figur 1:: Ein Blockschaltbild mit einer Grobarchitektur eines Systems mit einer erfindungsgemäßen Vorrichtung,
- Figur 2:: eine stark vereinfachte Fahrsituation, in welcher sich ein schematisch gezeigtes Fahrzeug in einer festgelegten Umgebung vor einer Kurve befindet und
- Figur 3:: eine weitere Fahrsituation mit einer angedeuteten Soll-Bahn, wobei sich ein schematisiert gezeigtes Fahrzeug in einer festgelegten Umgebung vor einer Querparklücke befindet.

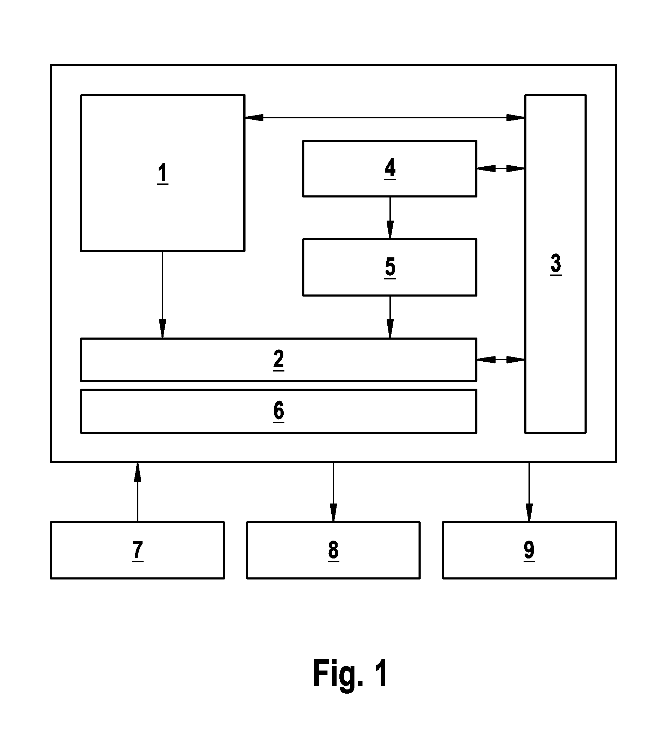

Figur 1 zeigt die Grobarchitektur eines bekannten Systems mit Bahnregelung und dynamischer Adaption, das mit einer erfindungsgemäßen Anordnung erweitert ist. Bei dem bekannten System wird angenommen, dass die Lenkeinschläge vom System selbst eingeregelt und von einer elektrischen bzw. elektromechanischen Servolenkung (EPS-Lenkung) angefordert werden. Als Basis der Lenkregelung können entweder abgespeicherte Soll-Bahnen oder Trajektorien dienen oder die auf Basis einer Parklückenvermessung berechneten Soll-Bahnen. Eine Beschaffenheit eines Umfeldes um das Fahrzeug kann durch eine Umfeldsensorik erfasst werden. Damit kann bei dem bekannten System eine dynamische Adaption der Bahnregelung erfolgen, indem diese an das Umfeld angepasst ist. Diese Systeme sind hinsichtlich ihrer Anwendung auf Standardsituationen beschränkt, beispielsweise auf Längsparklücken mit festgelegten begrenzenden Objekten. Bisherige solche bekannte Systeme ermöglichen einen hohen Grad an Unterstützung für den Fahrer.

Die in Figur 1 dargestellte Grobarchitektur der System-Erweiterung ist mit Figur 1 erläutert. Eine Daten-Speicherung, eine Parklückenvermessung und eine Lenkregelung bedienen sich einer Positionsbestimmungskomponente bzw. einer Odometriekomponente zur Schätzung von Position und gefahrener Strecke. Das gezeigte System umfasst eine zentrale Rechnereinheit bzw. im einzelnen einen Trajektorienspeicher 1, welcher auf eine Lenkregelung 2 einwirkt. Die Lenkregelung 2 kommuniziert mit einer Odometrie 3 zur Positionsbestimmung des Fahrzeugs. Die Odometrie 3 wiederum steht mit einer Parklückenvermessung 4 und mit dem Trajektorienspeicher 1 in Verbindung. Die Parklückenvermessung 4 dient einer Trajektorienplanung 5, welche der Lenkregelung 2 entsprechende Daten zuweist.

Der Trajektorienspeicher 1, die Parklückenvermessung 4 und die Trajektorienplanung 5 können beispielsweise in einem Parkpilotsystem 6 zusammengefasst werden. Zusammen mit der Odometrie 3 ist eine vorgeschlagene Systemeinheit vorhanden, auf welche über einen Fahrzeugbus 7 zugegriffen werden kann. Das Parkpilotsystem 6 mit der Odometrie 3 kann wiederum Informationen an eine Kommunikationseinrichtung 8 bzw. ein HMI (Human-Machine Interface) liefern. Über das HMI 8 können beispielsweise akustisch bzw. optisch oder haptisch dem Fahrer Lenkanweisungen übermittelt werden. Außerdem werden von dem System, welches das Parkpilotsystem 6 und die Odometrie 3 umfasst, Lenkanforderungen an eine elektrische Servolenkung 9 (EPS-Lenkung) gesendet. Die EPS-Lenkung kann ebenfalls über den Fahrzeugbus 7 angesprochen werden und ist in Figur 1 beispielsweise als separate Einheit dargestellt, um deren Bedeutung als Systemkomponente zu verdeutlichen.

Das Einlernen einer Soll-Bahn wird durch einen Benutzer bzw. Fahrer in Gang gesetzt. Wesentlich ist dabei, dass sich der Benutzer mit dem Fahrzeug an einer bestimmten Stelle befindet, die reproduzierbar anfahrbar ist, um zu einem späteren Zeitpunkt die eingelernte Soll-Bahn bzw. Soll-Trajektorie abzurufen und nachzufahren.

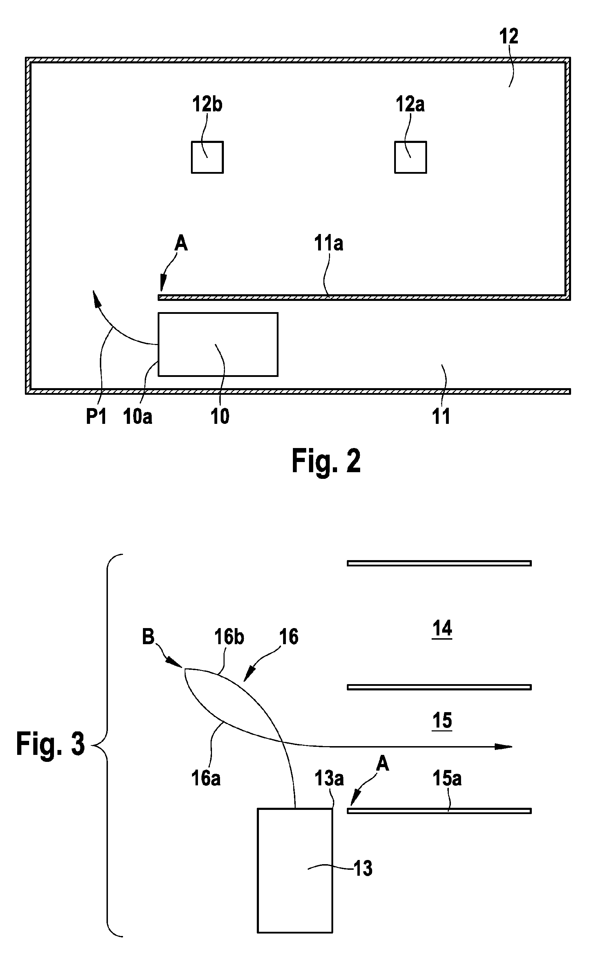

Figur 2 zeigt stark schematisiert einen Personenkraftwagen (Pkw) bzw. ein Fahrzeug 10 vor einem relativ engen Kurvenbereich einer Tiefgarageneinfahrt 11 für eine Einfahrt in ein Tiefgaragendeck 12. Mit Pfeil P1 ist eine mögliche Soll-Bahn einer Rechtskurve für das Fahrzeug 10 im Bereich der Kurve angedeutet. So kann das Fahrzeug 10 beispielsweise von der in Figur 2 gezeigten Position von einem erfahrenen bzw. geübten Fahrer eine Soll-Bahn gemäß Pfeil P1 durch Abfahren der Strecke eingelernt werden, wobei das Fahrzeug 10 eine Stelle vor dem Einlernen der Soll-Bahn gemäß der Position in Figur 2 einnimmt. In Figur 2 ist diese Startposition des schematisiert als Rechteck gezeichneten Fahrzeugs 10 gezeigt, wobei eine Vorderkante 10a des Fahrzeugs 10 in etwa rechtwinklig zu einer rechts benachbarten Wand 11a der Tiefgarageneinfahrt 11 ausgerichtet ist. Die Vorderkante 10a des Fahrzeugs 10 fluchtet dabei mit einem Ende A der Wand 11a.

Auf dem Tiefgaragendeck 12 sind zwei Stützpfeiler 12a, 12b als beispielhafte Hindernisse im Tiefgaragendeck dargestellt. Die vom geübten Fahrer zum Einlernen der Soll-Bahn abgefahrene Strecke umfasst insbesondere die Teilstrecke gemäß Pfeil P1 bis z.B. eine gewünschte Einparkposition auf dem Parkdeck 12 erreicht ist. Das Ende der eingelernten Soll-Bahn kann individuell vom geübten Fahrer bei der Einlernfahrt festgelegt werden, z.B. nur die Kurvenfahrt gemäß Pfeil P1 oder aber einen weiteren Streckenabschnitt bis zum Erreichen einer Parkposition umfassen. Die eingelernte Soll-Trajektorie kann beispielsweise in der Trajektorienplanung gemäß Figur 1 hinterlegt sein. Beim Einlernen der Soll-Bahn bzw. bei der Einlernfahrt wird während des Einparkvorgangs der über die zurückgelegte Strecke eingeschlagene Lenkradwinkel gespeichert. Zur Begrenzung der Menge an gespeicherten Daten bezüglich der Soll-Bahn können nur diejenigen Wertepaare aus beispielsweise einer zurück gelegten Strecke und einem Lenkregelungswert gespeichert werden, bei denen sich der Lenkradwinkel verändert.

Figur 3 zeigt beispielhaft eine weitere für einen ungeübten Fahrer schwierige Fahrsituation, wobei ein Fahrzeug 13 vorne seitlich und quer zur Längsausrichtung von zwei Querparklücken 14 und 15 positioniert ist. Darin ist eine eingelernte Soll-Bahn bzw. Trajektorienbahn 16 dargestellt, entlang derer das Fahrzeug 13 aus der gezeigten Position in die Querparklücke 15 gefahren werden kann, was durch Rückgriff auf die abgespeicherte Soll-Bahn 16 z.B. über Anweisungen an den Fahrer bzw. eine Lenkbahnregelung bewegt werden kann. Um die eingelernte Bahn abzurufen, fährt der Fahrer an eine vorab definierte Stelle bzw. einen Startpunkt gemäß Figur 3 und aktiviert die entsprechend eingelernte Soll-Bahn. Der Startpunkt ist hier so definiert, dass das Fahrzeug 13 z.B. mit einem vorderen rechten Fahrzeugeck 13a wenig vor einer Wand 15a der Querparklücke 15 liegt und mit dieser fluchtet.

Beim Nachfahren der Soll-Bahn 16 und basierend auf der im Trajektorienspeicher 1 abgelegten Informationen bzw. der gefahrenen Strecke s ermittelt die Odometrie 3 aufgrund der gespeicherten Lenkeinschläge fortlaufend die aktuelle Sollposition des Fahrzeuges 13 und vergleicht diese mit der aufgrund der gefahrenen Strecke s sowie der tatsächlichen Lenkeinschläge erreichten Ist-Position. Bei in der Praxis immer auftretenden Abweichungen sind Korrekturen der gespeicherten Lenkeinschläge erforderlich, um sich wieder an die Soll-Position anzunähern. Damit kann ein ungeübter Fahrer beispielsweise ein Fahrzeug 13 gemäß Figur 3 in die Parklücke 15 entlang der Soll-Bahn 16 einparken. Dazu wird vom Fahrer das Fahrzeug 13 zunächst vorwärts entlang der ersten Teilstrecke 16a der Soll-Bahn 16 bis zum Punkt B gefahren und anschließend rückwärts entlang der zweiten Teilstrecke 16b der Soll-Bahn 16, so dass das Fahrzeug ausgerichtet in die Querparklücke 15 eingeparkt ist.

Prinzipiell ist auch ein erfindungsgemäßes System denkbar, mit welchem beispielsweise eine im Speicher abgelegte Bahn in beiden Richtungen abzufahren, zum Beispiel bei einer Soll-Bahn, die in Vorwärtsrichtung beim Einlernen zurück gelegt wurde, auch in Rückwärtsrichtung angefordert werden kann, etwa um aus einer erreichten Position des Fahrzeugs nach abfahren der Soll-Bahn in umgekehrter Richtung entlang der gleichen Soll-Bahn zurück zu fahren.

Das Ausparken aus der ausgehend von der Situation gemäß Figur 3 erreichten Parkposition kann je nach Wunsch des Fahrers ohne Unterstützung für den Fahrer oder auf Grundlage der Soll-Bahn 16 erfolgen, dann in umgekehrter Abfolge der Fahrvorgänge, also zuerst vorwärts entlang der Teilstrecke 16b bis Punkt B, dann entlang der Teilstrecke 16a bis die Startposition und Startausrichtung des Fahrzeugs 13 gemäß Figur 3 wieder erreicht wird.

Grundsätzlich kann die Lenkunterstützung beim Abfahren entlang einer eingelernten Soll-Bahn jederzeit vom Fahrer unterbrochen bzw. zeitweise ausgesetzt oder abgebrochen werden. Zum Beispiel kann das Ausparken aus der Querparklücke 15 mit Hilfe der eingelernten Teilstrecke 16b der Soll-Bahn 16 nur bis zum Punkt B erfolgen und anschließend der Fahrer ohne Unterstützung weiterfahren, ohne dass auf die Teilstrecke 16a der Soll-Bahn 16 zurückgegriffen wird.

Für das Abrufen, Aktivieren bzw. Deaktivieren einer eingelernten Soll-Bahn sind geeignete Bedienmöglichkeiten für den Fahrer vorzusehen, z.B. Schaltknöpfe oder dergleichen.

## Patentansprüche

1. Vorrichtung zur semiautonomen Unterstützung der Lenkbewegung eines Fahrzeuges, mit Unterstützungsmittel zur Bereitstellung von Informationen über Lenkstellungen einer Fahrzeuglenkung und über eine zurückgelegte Strecke bei einer Fahrzeugfahrt, **dadurch gekennzeichnet, dass** eine durch eine Lernfahrt eingelernte Soll-Bahn (16) für eine festgelegte Umgebung in einer Rechnereinheit ablegbar ist und dass die Unterstützungsmittel dazu ausgelegt sind, auf die Soll-Bahn (16) bei Erreichen einer vorgegebenen Position des Fahrzeuges (10, 13) in der festgelegten Umgebung zurückzugreifen und den Fahrer beim Führen des Fahrzeugs (10, 13) entlang der Soll-Bahn (16) zu unterstützen.

2. Vorrichtung nach Anspruch 1, **dadurch gekennzeichnet, dass** eine Kommunikationseinrichtung (8) vorgesehen ist, mit welcher dem Fahrer auf Grundlage der eingelernten Soll-Bahn (16) Informationen und/oder Anweisungen zum Lenken des Fahrzeugs (10, 13) für die Fahrt entlang der Soll-Bahn (16) mitteilbar sind.

3. Vorrichtung nach Anspruch 1 oder 2, **dadurch gekennzeichnet, dass** Lenkkontrollmittel zur fahrerunabhängigen Kontrolle der Lenkbewegung des Fahrzeugs (10, 13) vorhanden sind, um die Lenkung des Fahrzeugs (10, 13) zu kontrollieren, so dass das Fahrzeug (10, 13) entlang der Soll-Bahn (16) fährt.

4. Vorrichtung nach einem der vorhergehenden Ansprüche, **dadurch gekennzeichnet, dass** die Rechnereinheit ausgebildet ist, eine Mehrzahl von unterschiedlichen Soll-Bahnen bereitzustellen.

5. Vorrichtung nach einem der vorhergehenden Ansprüche, **dadurch gekennzeichnet, dass** Mittel vorhanden sind, um bei Erreichen zumindest eines Punktes der Soll-Bahn durch das Fahrzeug den Fahrer darüber zu informieren, dass für die Bewegung des Fahrzeuges eine Soll-Bahn zur Verfügung steht.

6. Vorrichtung nach einem der vorhergehenden Ansprüche, **dadurch gekennzeichnet, dass** Mittel vorgesehen sind, um bei Erreichen zumindest eines Punktes eines Koordinatenfeldes im Nahbereich der Soll-Bahn den Fahrer darüber zu informieren, dass für die Bewegung des Fahrzeuges eine Soll-Bahn zur Verfügung steht.

7. Vorrichtung nach einem der vorhergehenden Ansprüche, **dadurch gekennzeichnet, dass** Positionserfassungsmittel vorhanden sind, um eine aktuelle Ist-Position des Fahrzeugs zu erfassen und mit einer Soll-Position entsprechend der Soll-Bahn zu vergleichen.

8. Vorrichtung nach einem der vorhergehenden Ansprüche, **dadurch gekennzeichnet, dass** die Kommunikationseinrichtung und/oder die Lenkkontrollmittel ausgebildet sind, mit den Positionserfassungsmitteln zusammenzuarbeiten, um die Ist-Position des Fahrzeugs an die Soll-Position anzupassen.

9. Vorrichtung nach einem der vorhergehenden Ansprüche, **dadurch gekennzeichnet, dass** Mittel eines Parkpilotsystems vorhanden sind.

10. Vorrichtung nach einem der vorhergehenden Ansprüche, **dadurch gekennzeichnet, dass** Sensormittel zur Erfassung eines Umfeldes des Fahrzeuges vorhanden sind.

11. Vorrichtung nach einem der vorhergehenden Ansprüche, **dadurch gekennzeichnet, dass** die Rechnereinheit in einem Bussystem des Fahrzeugs integriert ist.

12. Vorrichtung nach einem der vorhergehenden Ansprüche, **dadurch gekennzeichnet, dass** die Rechnereinheit derart ausgebildet ist, dass auf die Soll-Bahn zurückgreifbar ist, um den Fahrer zu unterstützen, das Fahrzeug entlang der Soll-Bahn mit einer Rückwärtsfahrt des Fahrzeugs zu führen.

13. Verfahren zur semiautonomen Unterstützung einer Lenkbewegung eines Fahrzeugs, wobei Unterstützungsmittel Informationen über Lenkstellungen einer Fahrzeuglenkung und über eine zurückgelegte Strecke bei einer Fahrzeugfahrt bereitstellen, **dadurch gekennzeichnet, dass** eine durch eine Lernfahrt eingelernte Soll-Bahn (16) für eine festgelegte Umgebung in einer Rechnereinheit abgelegt wird, und dass die Unterstützungsmittel dazu ausgelegt sind, auf die Soll-Bahn (16) bei Erreichen einer vorgegebenen Position des Fahrzeuges (10, 13) in der festgelegten Umgebung zurückzugreifen und den Fahrer beim Führen des Fahrzeugs (10, 13) entlang der Soll-Bahn (16) zu unterstützen.
